Europäisches Patentamt

European Patent Office

Office européen des brevets

(11) Veröffentlichungsnummer: **0 195 187**
**B1**

(12) **EUROPÄISCHE PATENTSCHRIFT**

(45) Veröffentlichungstag der Patentschrift: **16.05.90**

(51) Int. Cl.⁵: **F 16 K 27/04, F 16 K 11/074**

(21) Anmeldenummer: **86100809.2**

(22) Anmeldetag: **22.01.86**

(54) Sanitäres Absperr- oder Mischventil.

(30) Priorität: **18.03.85 DE 3509667**

(43) Veröffentlichungstag der Anmeldung:
**24.09.86 Patentblatt 86/39**

(45) Bekanntmachung des Hinweises auf die
Patenterteilung:
**16.05.90 Patentblatt 90/20**

(84) Benannte Vertragsstaaten:
**AT BE CH DE FR GB IT LI NL SE**

(56) Entgegenhaltungen:
EP-A-0 044 901
FR-A-2 244 112
US-A-1 424 250
US-A-1 591 332
US-A-1 790 317

RESEARCH DISCLOSURE, Nr. 233, September
1983, Seiten 282-283, disclosure Nr. 23324,
Havant Hampshire, GB; "Ceramic bodied taps"

(73) Patentinhaber: **IDEAL-STANDARD GMBH**
**Euskirchener Strasse 80**
**D-5300 Bonn 1 (DE)**

(72) Erfinder: **Delker, Wilfried, Dipl.-Ing.**
**Panoramastrasse 3a**
**D-5330 Königswinter (DE)**
Erfinder: **Derdack, Dieter**
**Händelstrasse 32**
**D-5560 Wittlich (DE)**

(74) Vertreter: **Gesthuysen, Hans Dieter, Dipl.-Ing.**
**et al**
**Patentanwälte Gesthuysen + von Rohr**
**Huyssenallee 15 Postfach 10 13 33**
**D-4300 Essen 1 (DE)**

## Beschreibung

Die Erfindung bezieht sich auf ein sanitäres Absperr- oder Mischventil mit einem insbesondere farbigen Ventilgehäuse zur Aufnahmen der Steuerelemente, das einstückig ausgebildet sowie einzeln auswechselbar und unter Zwischenschaltung von Dichtungen über ein vormontierbares, die in einer Kartusche vereinigten Steuerelemente aufnehmendes und Wasserzufuhrkanäle aufweisendes inneres Anschlußteil stülpbar ist, welches mit der Wasserinstallation verbindbar und an einem sanitären Apparat oder an einer Wand befestigbar ist.

Ein derartiges Absperr- oder Mischventil, von der die vorliegende Erfindung ausgeht, ist aus der Druckschrift FR—A—2244112 bekannt. Nachteilig bei dieser vorbekannten Ausführung ist, daß das Ventilgehäuse seiner Ausbildung und Anordnung nach nicht aus einem keramischen Material gefertigt sein kann.

Keramische Ventilgehäuse können leicht in beliebigen Farben und Formen hergestellt und mit beliebigen Dekors, Ornamenten, Kennzeichen etc. versehen werden. Die gewünschten Oberflächen können im Glasurbrand hergestellt werden und denen entsprechen, welche z.B. farbige Küchenspülen, Waschtische, Klosettkörper, Sitzwaschbecken etc. aus keramischen Material aufweisen. Die Oberflächen sind pflegeleicht, putzmittel- und kratzfest. Verkalkungsgefahren bestehen nicht. Ein weiterer Vorteil von keramischen Ventilgehäusen besteht darin, daß sie gegenüber den üblichen Metallausführungen eine deutlich geringere Wärmeleitfähigkeit haben und deshalb im Betrieb wohltemperiert bleiben.

Ventilgehäuse aus einem keramischen Material sind bereits durch die Druckschrift US—A—1591332 bekannt. Das in dieser Druckschrift offenbarte Ventilgehäuse umfaßt einen keramischen Ventilauslauf für einen Waschtisch mit einer Zugknopf- Ablaufventilsteuerung. Die Steuerelemente für die Temperatur- und Mengeneinstellung sind in dem Ventilgehäuse nicht vorgesehen, sondern Bestandteil separater Ventile für kaltes und warmes Wasser. Das durch die Druckschrift US—A—1591332 bekannte keramische Ventilgehäuse eignet sich nicht für die gleichzeitige Aufnahme der Steuerelemente für ein Absperr- und Mischventil und legt eine solche Konstruktion auch nicht nahe.

Der Erfindung liegt die Aufgabe zugrunde, ein sanitäres Absperr- und Mischventil der eingangs genannten Art mit einem Ventilgehäuse aus einem keramischen Material zu schaffen, welches einfach in der Herstellung, sicher in der Wirkungsweise und insbesondere auch montage- und reparaturfreundlich ist.

Die Lösung dieser Aufgabe ergibt sich aus den Merkmalen des Patentanspruchs.

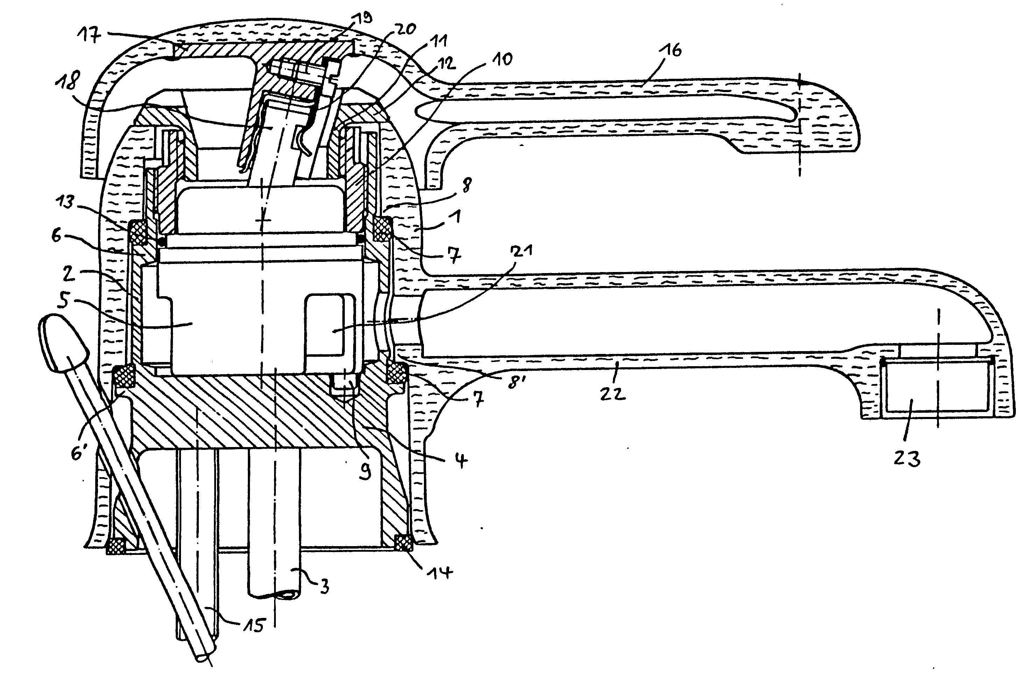

In der Zeichnung ist der Erfindungsgegenstand in einem Ausführungsbeispiel als Einhebel-Mischbatterie für Waschtische im Längsschnitt dargestellt.

Darin ist mit 1 ein Ventilgehäuse bezeichnet.

Das Ventilgehäuse 1 besteht aus Porzellan und weist eine glasierte Oberfläche auf. In dem Ventilgehäuse 1 befindet sich ein Anschlußteil 2 in der Form eines hülsenförmigen Innengehäuses aus Messing mit Anschlußröhrchen 3 für das kalte und warme Wasser, die an einem Sockelteil 4 befestigt sind und mit nicht gezeigten Wasserzufuhrkanälen des Sockelteils 4 in Verbindung stehen, auf dem unter Zwischenschaltung von Dichtungen eine Kartusche 5 mit den Steuerelementen angeordnet ist. Wie ersichtlich, ist das Innengehäuse 2 aussen mit zwei umlaufenden kragenförmigen Abstufungen 6, 6' versehen, wobei der Durchmesser der unteren Abstufung 6' grösser ist. Die Abstufungen 6, 6' dienen zur Aufnahme von axialen Dichtungen 7 in der Form von O-Ringen, welche mit entsprechenden inneren Abstufungen 8, 8' des Ventilgehäuses 1 zusammenwirken.

Die Kartusche 5 ist mittels eines Positionszapfens 9 in seiner Lage gesichert. Die Befestigung der Kartusche 5 erfolgt mittels eines in dem oberen Ende des Innengehäuses 2 gehaltenen Schraubringes 10 aus Messing, in dem ein weiterer Schraubring 11 aus Kunststoff angeordnet ist. Der Schraubring 11 übergreift mit einem Aussenkragen 12 das obere Ende des Ventilgehäuses 1 und sichert dieses in seiner Position. Die seitliche Abdichtung der Kartusche 5 gegenüber dem Innengehäuse 2 erfolgt über einen O-Ring 13.

Das Ventilgehäuse 1 ist einstückig ausgebildet und kann leicht ausgewechselt werden. Es ist über das vormontierbare Innengehäuse 2 stülpbar, welches unter Zwischenschaltung einer unteren Dichtung 14 auf der nicht gezeigten Armaturenbank eines Waschtisches befestigt wird, und zwar mittels eines Schraubstehbolzens 15.

In dem Griffhebel 16 befindet sich eine eingeklebte Aufnahme 17 für das obere Ende eines Steuerhebels 18, welches über ein mittels einer Schraube 19 gehaltenes Federelement 20 mit der Aufnahme 17 verbunden ist. Das untere Ende des Steuerhebels 18 wirkt mit nicht gezeigten scheibenförmigen Steuerelementen der Kartusche 5 zusammen, aus der das Wasser über eine Öffnung 21 in der Auslauf 22 strömt, dessen vorderes Ende mit einem Strahlregler 23 ausgerüstet ist, um die Entstehung höherer Innendrücke zu vermeiden, die bei verstopften Wasser- Luft-Mischdüsen auftreten können.

Ein erfindungsgemäßes Ventil ist montage- und reparaturfreundlich. Für die Montage wird zur Vermeidung einer Gefährdung des Ventilgehäuses 1 zunächst das Anschlußteil 2 auf dem Waschtisch befestigt. Anschließend wird das Ventilgehäuse 1 einfach unter Zwischenschaltung der Dichtungen 7 über das vormontierte Anschlußteil 2 gestülpt und mittels des Kunststoff-Schraubringes 11 befestigt. Die Art der Abdichtung und Gestaltung von Ventilgehäuse 1 und Innengehäuse bzw. Anschlußteil 2 stellt sicher, daß Toleranzprobleme zwischen den beiden Materialien Keramik und Messing nicht auftreten.

Die dargestellte und beschriebene Ausführung ist nur ein Beispiel zur Verwirklichung der Erfindung, und diese ist nicht darauf beschränkt, vielmehr sind im Rahmen des erfindungsgemäßen Grundgedankens besonders hinsichtlich der Anordnung und Gestaltung der einzelnen Teile auch noch andere Möglichkeiten gegeben.

So könnten das Innengehäuse aussen und das Ventilgehäuse innen im wesentlichen auch absatzlos gestaltet sein, wobei die Abdichtung zwischen den Gehäusen über Lippendichtungen radial erfolgen könnte.

Die Herstellung eines erfindungsgemäßen Ventils bereitet keine Schwierigkeiten. Der Kostenaufwand ist relativ gering.

## Patentanspruch

Sanitäres Absperr- oder Mischventil mit einem insbesondere farbigen Ventilgehäuse (1) zur Aufnahme der in einer Kartusche (5) Vereinigten Steuerelemente, das einstückig ausgebildet sowie einzeln auswechselbar und unter Zwischenschaltung von Dichtungen über ein vormontierbares, die Steuerelemente aufnehmendes und Wasserzufuhrkanäle aufweisendes inneres Anschlußteil stülpbar ist, welches mit der Wasserinstallation verbindbar und an einem sanitären Apparat oder an einer Wand befestigbar ist, dadurch gekennzeichnet, daß das Ventilgehäuse (1) aus einem keramischen Material besteht und das Anschlußteil als ein hülsenförmiges Innengehäuse (2) ausgebildet ist mit einem die Wasserzufuhrkanäle aufweisenden Sockelteil (4), auf dem die Steuerelemente (5) innerhalb des Innengehäuses (2) befestigt sind, das mit mindestens zwei außen umlaufenden kragenförmigen Abstufungen (6, 6') versehen ist, deren Durchmesser von oben nach unten zunehmen und zur Aufnahme von axialen Dichtungen (7) dienen, welche mit entsprechenden inneren Abstufungen (8, 8') des Ventilgehäuses (1) zusammenwirken, und daß die Kartusche (5) mittels eines in dem oberen Ende des Innengehäuses (2) gehaltenen Schraubringes (10) auf dem Sockelteil (4) befestigt ist, und daß ein weiterer Schraubring (11) in dem oberen Ende des Schraubringes (10) gehalten ist und einen Außenkragen (12) aufweist, welcher das obere Ende des Ventilgehäuses (1) übergreift und dieses in seiner Position sichert.

## Revendication

Robinet d'arrêt ou mitigeur sanitaire, comprenant notamment une cage de vanne (1) de couleur pour la réception des éléments de commande réunis dans une cartouche (5) qui est conformée en une seule pièce et interchangeable séparément et qui, avec interposition de joints d'étanchéité peut être emboîtée sur une pièce de raccordement intérieure pouvant être montée préalablement, recevant les éléments de commande et comprenant des canaux d'arrivée d'eau, laquelle pièce de raccordement peut être reliée à l'installation d'eau et fixée sur un appareil sanitaire ou sur un mur, caractérisé par le fait que la cage de vanne (1) est réalisée en une matière céramique et que la pièce de raccordement est conformée en cage intérieure (2) sous forme de douille, avec un socle (4) comportant les canaux d'arrivée d'eau sur lequel les éléments de commande (5) sont fixés à l'intérieur de la cage intérieure (2) laquelle présente au moins deux échelonnements circulaires (6, 6') sous forme de collets dont les diamètres augmentent du haut en bas et qui servent à recevoir des joints d'étanchéité axiaux (7) lesquels coopèrent avec des échelonnements intérieurs correspondants (8, 8') de la cage de vanne (1), que la cartouche (5) est fixée sur le socle (4) au moyen d'une bague filetée (10) maintenue dans l'extrémité supérieure de la cage intérieure (2) et qu'une bague filetée supplémentaire (11) est maintenue dans l'extrémité supérieure de la bague filetée (10) et munie d'un collet extérieur (12) lequel recouvre l'extrémité supérieure de la cage de vanne (1) et maintient celle-ci en position.

## Claim

Sanitary shut-off- or mixing valve having a valve housing, in particular a coloured one, for receiving the control elements combined in a cartridge (5), which is made in one piece and is individually exchangeable and, with seals interposed, can be put on over a premountable inner connecting portion which receives the control elements and has water supply ducts and can be connected to the water installation and secured on a sanitary apparatus or on a wall, characterised in that the valve housing (1) is of a ceramic material and the connecting part is formed as a sleeve-like inner housing (2) with a base portion (4) having the water supply ducts, on which base portion the control elements (5) are secured inside the inner housing (2), which is provided with at least two collar-shaped stepped portions (6, 6') running round the outside, the diameters of which increase from top to bottom and are used to receive axial seals (7) which cooperate with corresponding inner stepped portions (8, 8') of the valve housing (1), and in that the cartridge (5) is secured on the base portion (4) by means of a screw ring (10) retained in the upper end of the inner housing (2), and in that a further screw ring (11) is retained in the upper end of the screw ring (10) and has an outer collar (12) which engages over the upper end of the valve housing (1) and secures it in its position.

EP 0 195 187 B1